# FASCICULE DE BREVET EUROPEEN

(11) **EP 2 375 045 B1**
(45) Date de publication et mention de la délivrance du brevet: **16.04.2014**
(21) Numéro de dépôt: 11166940.4
(22) Date de dépôt: 08.09.2009
(51) Int. Cl.: F02K 1/04, F02K 1/80

(54) **Ensemble d'arrière-corps muni de liaisons souples à butée**
Heckteileinheit, die mit flexiblen Verbindungen mit Anschlag ausgestattet ist
Afterbody assembly provided with flexible links with abutments

(30) Priorité: 08.09.2008 FR 0856009
(43) Date de publication de la demande: 12.10.2011
(62) Demande divisionnaire de: 09741378.5
(73) Titulaire: HERAKLES, 33185 Le Haillan (FR)
(72) Inventeur: Conete, Eric, 33700, Merignac (FR)
(74) Mandataire: Desormiere, Pierre-Louis

(56) Documents cités:
- EP-A1- 0 316 233
- EP-A2- 1 873 385
- US-A1- 2008 115 484

## Description

### Arrière-plan de l'invention

La présente invention se rapporte à la fixation des pièces en matériau composite utilisées dans les arrière-corps de moteurs aéronautiques tels que les turboréacteurs.

Afin de réduire la masse des arrière-corps, il est connu de réaliser une ou plusieurs pièces de l'arrière-corps, telles que le cône d'échappement, la tuyère primaire, et/ou le mélangeur en matériau composite à matrice céramique (CMC) plutôt qu'en matériau métallique. Ces pièces présentent un faible coefficient de dilatation thermique par rapport aux carters métalliques du moteur sur lesquels elles doivent être montées. Afin de compenser les dilatations différentielles entre ces éléments, la pièce en CMC est montée sur le carter en matériau métallique au moyen de pattes de fixation élastiquement souples généralement réalisées en matériau métallique réfractaire.

L'utilisation de pattes de fixation souples pour le montage d'un mélangeur en CMC est notamment décrite dans les documents US 2008/115484, WO 2008/139114 et FR 2 912 469. Le document WO 2008/148999 décrit l'utilisation de pattes de fixation souples pour la fixation de tuyères d'échappement dans une turbine à gaz. Le document EP 1 873 385 divulgue un ensemble d'arrière corps comprenant un cône d'échappement maintenu en regard d'une pièce annulaire au moyen de pattes de fixation souples.

Outre la compensation des dilatations différentielles, les pattes de fixation doivent assurer la tenue de l'ensemble vis-à-vis des charges normales et limites rencontrées par le moteur, c'est-à-dire assurer le maintien des pièces l'une par rapport à l'autre sous de telles charges. Les "charges" (ou facteurs de charge) correspondent aux forces liées aux accélérations que subit le moteur et sont exprimées en nombre de G. Les charges limites correspondent aux charges les plus fortes susceptibles d'être rencontrées en condition d'exploitation (trou d'air ou atterrissage très difficile). Cependant, les règles de sécurité dans le domaine aéronautique définissent en outre un niveau de charge encore plus important, dit "charge ultime" ou "charge extrême". En l'absence de prescriptions particulières, la charge extrême est en général définie en multipliant la charge limite par un facteur de sécurité. Par exemple, le seuil de charge ultime peut être de 1,5 fois celui de la charge limite.

La justification de la tenue des pattes de fixation souples aux charges ultimes est difficile. En effet, afin de résister aux charges ultimes, les pattes de fixation souples doivent présenter une épaisseur très importante aussi bien au niveau du corps de la patte formant la liaison élastiquement souple entre les deux pièces que sur les parties d'attache de la patte à la pièce en CMC. Un tel renforcement des pattes de fixation conduirait à une augmentation de masse de l'ensemble trop importante en contradiction avec les objectifs de gain de masse visés par l'utilisation de pièces en CMC ainsi qu'à une rigidification de la liaison.

### Objet et résumé de l'invention

La présente invention a pour but de proposer une nouvelle conception de liaison entre une pièce en CMC et une pièce en matériau métallique dans un arrière-corps de moteur aéronautique qui assure une tenue de la pièce en CMC vis-à-vis des charges ultimes, et ce sans nuire à la souplesse de la liaison et en respectant les objectifs de gain de masse.

Conformément à l'invention, le problème de la tenue, vis-à-vis des charges ultimes, d'une liaison souple entre une pièce d'arrière-corps en CMC et une pièce annulaire métallique solidaire d'un carter de moteur aéronautique peut être résolu en montant la pièce d'arrière-corps en aval de la pièce annulaire par des pattes de fixation souples, le bord de la partie amont de la pièce d'arrière corps étant maintenu en regard de la pièce annulaire suivant la direction axiale et au-dessus de la première extrémité des pattes de fixation suivant la direction radiale, l'extrémité de chaque patte fixée sur la pièce annulaire comportant en outre un talon qui s'étend axialement dans une direction opposée à la pièce annulaire.

Ainsi, grâce à un tel positionnement du bord de la partie amont de la pièce d'arrière-corps en CMC vis-à-vis de la pièce annulaire, il est possible d'assurer une mise en butée radiale et/ou axiale de la pièce en CMC sur l'anneau métallique en cas de charges importants telles que des charges ultimes, et ce avec des pattes de liaisons souples dimensionnées seulement pour assurer un jeu prédéfini entre les deux pièces sous des charges normale et limites.

Selon un aspect de l'invention, la première extrémité des pattes de fixation comprend en outre un talon qui s'étend axialement dans une direction opposée à la pièce annulaire afin de faciliter la mise en butée contre cette extrémité.

L'invention concerne aussi un moteur aéronautique comprenant un ensemble d'arrière-corps selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue en perspective d'un arrière-corps de moteur aéronautique;
- les figures 2 à 5 sont des vues en coupe partielle montrant une patte de fixation du cône d'échappement de l'arrière-corps de la figure 1 sous différentes charges;
- les figures 6 à 9 sont des vues en coupe partielle montrant une patte de fixation de la tuyère primaire de l'arrière-corps de la figure 1 sous différentes charges;
- la figure 10 est une vue en perspective d'un mélangeur de moteur aéronautique;
- les figures 11 à 14 sont des vues en coupe partielle montrant une patte de fixation de la structure à lobes du mélangeur de la figure 10 sous différentes charges;

### Description détaillée d'un mode de réalisation

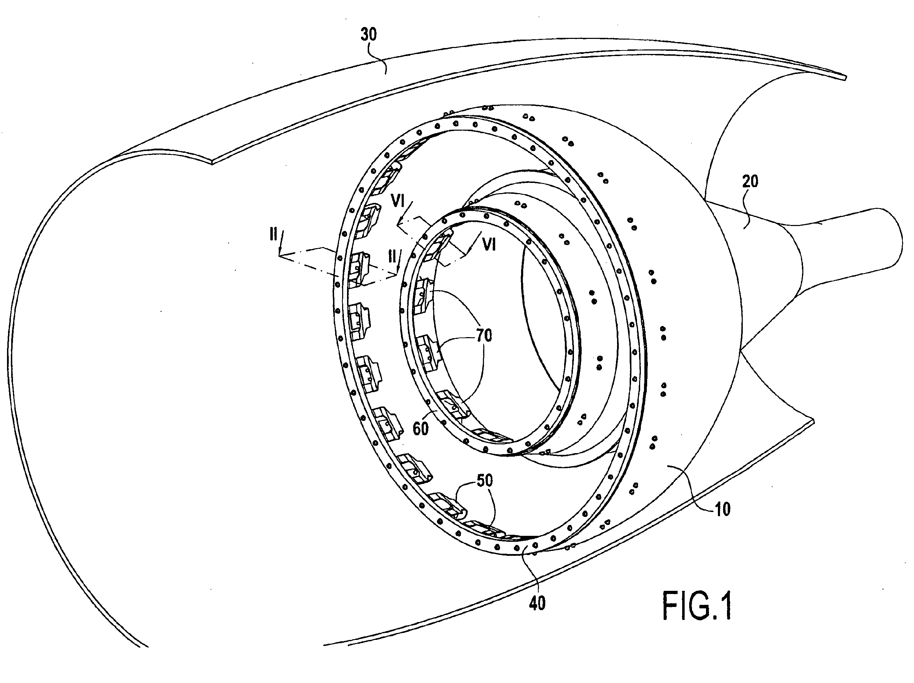

La figure 1 illustre un arrière-corps de turboréacteur constituant le système d'échappement de ce dernier. L'arrière-corps comprend une tuyère d'éjection ou tuyère primaire 10 et un corps central ou cône d'échappement 20 (encore appelé "plug") tous deux disposés au moins partiellement à l'intérieur d'une nacelle 30. La tuyère primaire 10 et le cône d'échappement 20 sont en matériaux CMC.

De façon bien connue, les pièces en matériau CMC sont formées par un renfort fibreux en fibres réfractaires (carbone ou céramique) qui est densifié par une matrice céramique, notamment carbure, nitrure, oxyde réfractaire,.... Des exemples typiques de matériaux CMC sont les matériaux C-SiC (renfort en fibres de carbone et matrice en carbure de silicium), les matériaux SiC-SiC et les matériaux C-C/SiC (matrice mixte carbone/carbure de silicium). La fabrication de pièces en composite CMC est bien connue. La densification du renfort fibreux peut être réalisée par voie liquide (imprégnation par une résine précurseur de la matrice céramique et transformation en céramique par réticulation et pyrolyse, le processus pouvant être répété) ou par voie gazeuse (infiltration chimique en phase vapeur).

La tuyère primaire 10 est fixée sur un premier anneau de fixation métallique 40 appartenant ou destiné à être fixé au carter du moteur (non représenté) au moyen de pattes de fixation élastiquement souples 50. Ces éléments forment un premier ensemble d'arrière-corps selon l'invention.

Le cône d'échappement 20 est quant à lui fixé sur un deuxième anneau de fixation métallique 60 faisant également partie du carter du moteur ou destiné à être fixé sur celui-ci au moyen de pattes de fixation élastiquement déformables 70. Ces éléments forment un deuxième ensemble d'arrière-corps selon l'invention.

Dans la présente invention, les pattes de fixation sont réalisées en un matériau métallique réfractaire tel que notamment de l'Inconel®, de l'Hastelloy® ou du Waspalloy®. En fonction de la taille et de la masse de la pièce en CMC, les pattes de fixation sont dimensionnées pour assurer une tenue mécanique vis-à-vis des charges normales et limites qui correspond au maintien d'un jeu radial et axial entre la pièce en CMC et la pièce métallique afin de permettre la compensation des dilatations différentielles et l'amortissement des vibrations.

Par ailleurs, la tenue mécanique des pattes de fixation vis-à-vis des charges plus importantes et notamment les charges ultimes correspond au maintien de l'intégrité de la fixation de la pièce en CMC sur la pièce métallique (non rupture des pattes de fixation) et à la limitation des efforts exercés sur la pièce en CMC.

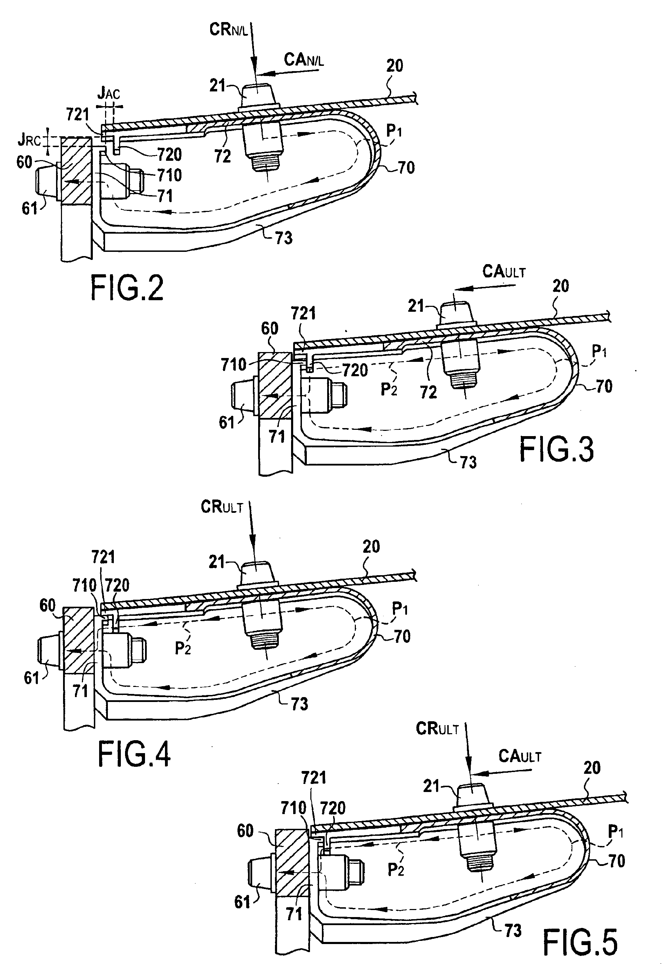

Un exemple de patte de fixation est illustré sur les figures 2 à 5. La figure 2 représente une patte de fixation 70 comprenant un corps 73 qui s'étend entre une première extrémité 71 et une seconde extrémité 72. Le corps 73 présente une forme recourbée qui confère à la patte sa souplesse élastique. La première extrémité 71 est fixée sur l'anneau métallique 60 par des organes de fixation 61 de type vis/écrou. De même, la deuxième extrémité 72 est fixée à la partie amont du cône d'échappement 20 par des organes de fixation 21 de type vis/écrous. Sur la figure 2, la patte de fixation 70 est représentée dans des conditions de fonctionnement sous charge radiale normale ou limite CR_{N/L} et sous charge axiale normale ou limite CA_{N/L}. Dans ces conditions, un jeu radial J_{RC} et un jeu axial J_{AC} sont maintenus entre les deux extrémités 71 et 72 de la patte 70 et, par conséquent, entre le cône en CMC 20 et l'anneau métallique 60. Les efforts exercés sur le cône 20 sont transmis à l'anneau 60 par un chemin P₁ formé par le corps 73 de la patte entre la deuxième extrémité 72 au niveau sa fixation au cône 20 et la première extrémité 71 au niveau de sa fixation à l'anneau 60.

La patte de fixation 70 comprend en outre un élément de butée axiale 720 qui s'étend radialement à partir de la deuxième extrémité 72 et en regard de la première extrémité 71 ainsi qu'un élément de butée radiale 721 qui s'étend axialement à partir de la deuxième extrémité 72 et au-dessus de la première extrémité 71. Dans le mode de réalisation présenté ici, l'élément de butée radiale 721 correspond à un prolongement de la deuxième extrémité 72.

Sur la figure 3, la patte de fixation 70 est soumise à une charge axiale CA_{ULT} significativement supérieure à la charge limite comme la charge ultime par exemple. Dans ces conditions, l'élément de butée axiale 720 vient en contact avec la première extrémité 71 de la patte 70 (jeu axial J_{AC}=0). Cette mise en butée permet de former, en outre du chemin P₁, un autre chemin P₂ pour la transmission des efforts exercés sur le cône 20 et de réduire ainsi les contraintes dans le cône 20.

Sur la figure 4, la patte de fixation 70 est soumise à une charge radiale CR_{ULT} significativement supérieure à la charge limite comme la charge ultime par exemple. Dans ces conditions, l'élément de butée radiale 721 vient en contact avec la première extrémité 71 de la patte 70 (jeu radial J_{RC}=0). Cette mise en butée permet de former, en outre du chemin P₁, un autre chemin P₂ pour la transmission des efforts exercés sur le cône 20 et de réduire ainsi les contraintes dans celui-ci.

Sur la figure 5, la patte de fixation 70 est soumise à la fois à une charge axiale CA_{ULT} et à une charge radiale CR_{ULT} significativement supérieures à la charge limite (par exemple charge ultime). Dans ces conditions, l'élément de butée axiale 720 et l'élément de butée radiale 721 sont tous les deux en contact avec la première extrémité 71 de la patte 70 (jeu axial J_{AC}=0 et jeu radial J_{RC}=0). Les deux chemins de passage des efforts P₁ et P₂ sont toujours présents.

Dans l'exemple décrit ici, la première extrémité 71 est dotée d'un talon 710 facilitant le contact entre l'élément de butée radiale 721 et l'extrémité 71. Toutefois, la première extrémité 71 peut ne pas comporter un tel talon du moment que l'élément de butée radiale 721 se trouve au dessus de la première extrémité 71.

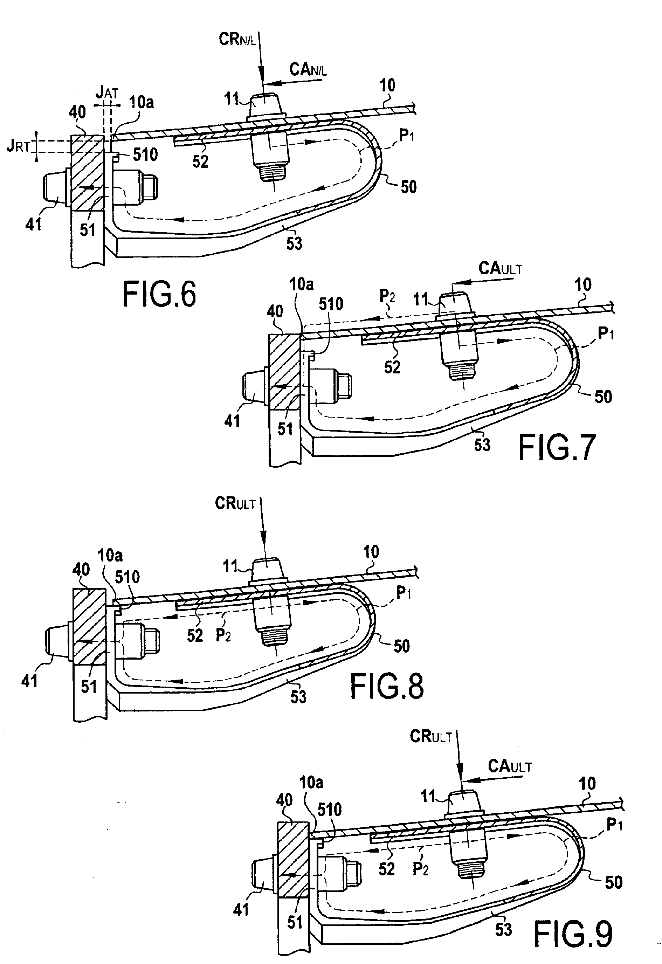

Les figures 6 à 9 présentent un mode de réalisation de la présente invention qui diffère de l'exemple présenté dans les figures 2 à 5 en ce que les butées axiale et radiale sont réalisées directement par contact de la pièce en CMC avec la pièce et/ou l'extrémité de la patte de fixation. A cet effet, la tuyère primaire 10 est montée en aval de l'anneau métallique 40 par les pattes de fixation 50. Plus précisément et tel que représenté sur la figure 6, le bord 10a de la partie amont de la tuyère 10 est maintenu à la fois en regard de l'anneau 40 suivant la direction axiale et au-dessus de la première extrémité 51 des pattes de fixation 50. Chaque patte de fixation 50 comprend un corps 53 qui s'étend entre la première extrémité 51 et une seconde extrémité 52. Le corps 53 présente une forme recourbée qui confère à la patte sa souplesse élastique. La première extrémité 51 est fixée sur l'anneau métallique 40 par des organes de fixation 41 de type vis/écrou. De même, la deuxième extrémité 52 est fixée à la partie amont de la tuyère 10 par des organes de fixation 11 de type vis/écrous.

Sur la figure 6, la patte de fixation 50 est représentée dans des conditions de fonctionnement sous charge radiale normale ou limite CR_{N/L} et sous charge axiale normale ou limite CA_{N/L}. Dans ces conditions, un jeu radial J_{RT} est maintenu entre le bord 10a de l'extrémité de la tuyère 10 et la première extrémité 51 de la patte 50 tandis qu'un jeu axial J_{AT} est maintenu entre le bord 10a de l'extrémité de la tuyère 10 et l'anneau 40. Les efforts exercés sur la tuyère 10 sont transmis à l'anneau 40 par un chemin P₁ formé par le corps 53 de la patte entre la deuxième extrémité 52 au niveau sa fixation à la tuyère 10 et la première extrémité 51 au niveau de sa fixation à l'anneau 40.

Sur la figure 7, la patte de fixation 50 est soumise à une charge axiale CA_{ULT} significativement supérieure à la charge limite telle que la charge ultime. Dans ces conditions, le bord 10a de la partie amont de la tuyère 10 vient en contact avec l'anneau 40 (jeu axial J_{AT}=0). Cette mise en butée permet de former un chemin supplémentaire P₂ pour la transmission des efforts exercés sur la tuyère 10 et de réduire ainsi les contraintes dans celle-ci.

Sur la figure 8, la patte de fixation 50 est soumise à une charge radiale CR_{ULT} significativement supérieure à la charge limite (charge ultime par exemple). Dans ces conditions, le bord 10a de la partie amont de la tuyère 10 vient en contact avec la première extrémité 51 de la patte 50 (jeu radial J_{RT}=0). Cette mise en butée permet également de former un chemin supplémentaire P₂ pour la transmission des efforts exercés sur la tuyère 10.

Sur la figure 9, la patte de fixation 50 est soumise à la fois à une charge axiale CA_{ULT} et à une charge radiale CR_{ULT} significativement supérieures à la charge limite (par exemple charge ultime). Dans ces conditions, le bord 10a de la partie amont de la tuyère 10 vient contact à la fois avec la première extrémité 51 de la patte 50 (jeu radial J_{RT}=0) et avec l'anneau 40 (jeu axial J_{AT}=0). Les deux chemins de passage des efforts P₁ et P₂ sont toujours présents.

Dans le mode de réalisation décrit ici, la première extrémité 51 est dotée d'un talon 510 facilitant le contact entre l'extrémité de la tuyère 10 et l'extrémité 51 de la patte 50. Toutefois, la première extrémité 51 peut ne pas comporter un tel talon du moment que le bord 10a de la tuyère se trouve au dessus de la première extrémité 51.

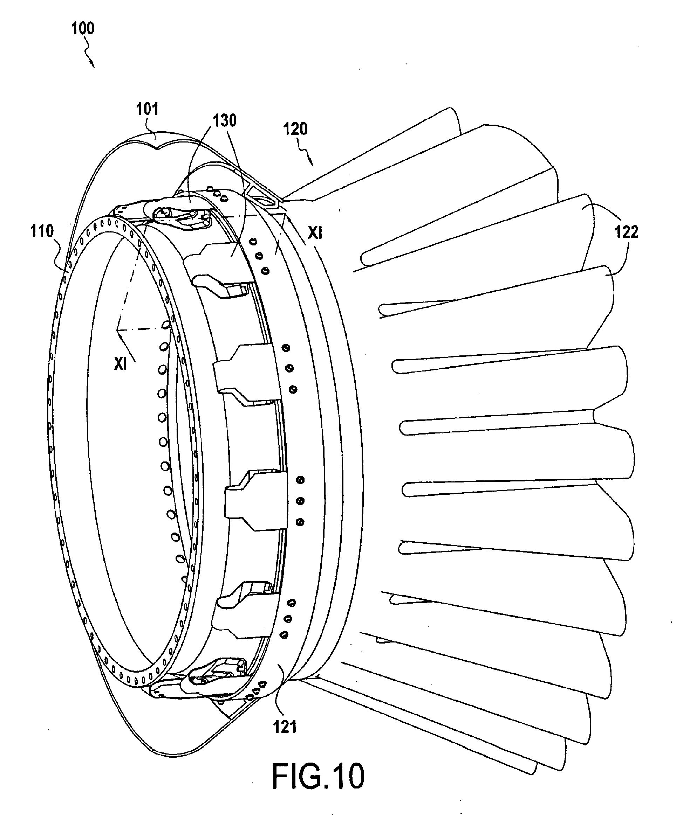

La figure 10 illustre un mélangeur 100 pour tuyère à flux séparés (flux primaire/flux secondaire) de turbomachine qui constitue un ensemble d'arrière-corps. Le mélangeur comprend une virole de fixation 110 en matériau métallique destinée à raccorder le mélangeur au carter d'échappement d'un turboréacteur (non représenté), une structure à lobes 120 en CMC dont des exemples de réalisation sont notamment décrits dans les documents WO 2008/104692 et WO 2008/139114 dont le contenu est incorporé ici par référence, et un capotage externe 101. La structure à lobes 120 présente dans sa partie amont 121 une forme de révolution et, dans sa partie aval, une forme ondulée définissant une pluralité de lobes 122. De façon bien connue, l'utilisation d'une telle structure à lobes dans une tuyère à mélangeur flux primaire/flux secondaire permet de contrôler le mélange entre les deux flux de manière à améliorer les performances du turboréacteur et réduire le bruit émis par ce dernier.

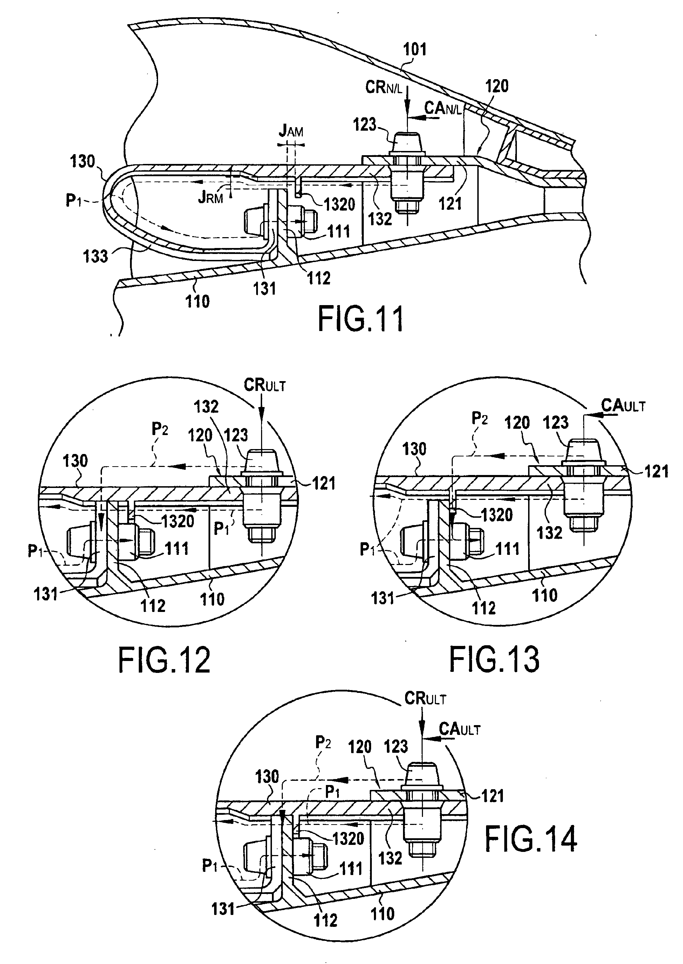

La structure à lobes 120 est fixée sur la virole de fixation 110 au moyen de pattes de fixation élastiquement souples 130. Plus précisément et telle qu'illustrée sur la figure 11, chaque patte de fixation comprend un corps 133 qui s'étend entre une première extrémité 131 et une seconde extrémité 132. Le corps 133 présente une forme recourbée qui confère à la patte sa souplesse élastique. La première extrémité 131 est fixée sur une bride de fixation 112 de la virole de fixation métallique 110 par des organes de fixation 111 de type vis/écrou. De même, la deuxième extrémité 132 est fixée à la partie amont 121 de la structure à lobes 120 par des organes de fixation 123 de type vis/écrous. La patte de fixation 130 comprend en outre un élément de butée axiale 1320 qui s'étend radialement à partir de la deuxième extrémité 132 et en regard à la fois de la bride de fixation 112 et de la première extrémité 131. Dans le mode de réalisation présenté ici, l'élément de butée radiale est constitué par la portion de la deuxième extrémité 132 située au dessus la première extrémité 131.

Sur la figure 11, la patte de fixation 130 est représentée dans des conditions de fonctionnement sous charge radiale normale ou limite CR_{N/L} et sous charge axiale normale ou limite CA_{N/L}. Dans ces conditions, un jeu radial J_{RM} est maintenu entre les deux extrémités 131 et 132 de la patte 130 et, par conséquent, entre la structure à lobes 120 et la virole de fixation 110. Un jeu axial J_{AM} est en outre maintenu entre l'élément de butée axiale 1320 et la bride de fixation 112. Les efforts exercés sur la structure à lobes 120 sont transmis à la virole 110 par un chemin P₁ formé par le corps 133 de la patte entre la deuxième extrémité 132 au niveau sa fixation à la structure à lobes 120 et la première extrémité 131 au niveau de sa fixation à la virole 110.

Sur la figure 12, la patte de fixation 130 est soumise à une charge radiale CR_{ULT} significativement supérieure à la charge limite comme la charge ultime par exemple. Dans ces conditions, la deuxième extrémité 132 de la patte 130 vient en contact avec la première extrémité 131 de la patte 130 (jeu radial J_{RM}=0). Cette mise en butée permet de former, en outre du chemin P₁, un autre chemin P₂ pour la transmission des efforts exercés sur la structure à lobes 120 et de réduire ainsi les contraintes dans celle-ci.

Sur la figure 13, la patte de fixation 130 est soumise à une charge axiale CA_{ULT} significativement supérieure à la charge limite comme la charge ultime par exemple. Dans ces conditions, l'élément de butée axiale 1320 vient en contact avec la bride de fixation 112 elle-même en contact avec la première extrémité 131 de la patte 130 (jeu axial J_{AM}=0). Cette mise en butée permet de former, en outre du chemin P₁, un autre chemin P₂ pour la transmission des efforts exercés sur la structure à lobes 120 et de réduire ainsi les contraintes dans celle-ci.

Sur la figure 14, la patte de fixation 130 est soumise à la fois à une charge axiale CA_{ULT} et à une charge radiale CR_{ULT} significativement supérieures à la charge limite (par exemple charge ultime). Dans ces conditions, l'élément de butée axiale 1320 vient en contact avec la bride de fixation 112 elle-même en contact avec la première extrémité 131 de la patte 130 (jeu axial J_{AM}=0) tandis que la deuxième extrémité 132 de la patte 130 vient en contact avec la première extrémité 131 de la patte 130 (jeu radial J_{RM}=0). Les deux chemins de passage des efforts P₁ et P₂ sont toujours présents.

## Revendications

1. Ensemble d'arrière-corps pour moteur aéronautique comprenant, suivant une direction axiale, une pièce annulaire (40) en matériau métallique solidaire du moteur aéronautique et une pièce d'arrière-corps (10) en matériau composite à matrice céramique présentant au moins dans sa partie amont une forme de révolution, la pièce d'arrière-corps (10) étant montée sur la pièce annulaire (40) par des pattes de fixation élastiquement souples (50), chaque patte de fixation ayant une première extrémité fixée (51) sur la pièce annulaire (40) et une seconde extrémité (52) fixée sur la partie amont de la pièce d'arrière-corps (10), la pièce d'arrière-corps (10) étant montée en aval de la pièce annulaire (40), le bord (10a) de la partie amont de ladite pièce d'arrière corps (10) étant maintenu en regard de la surface radiale externe de la pièce annulaire (40) suivant la direction axiale, ledit bord étant en outre maintenu suivant une direction radiale au-dessus de la partie terminale de la première extrémité (51) des pattes de fixation (50), **caractérisé en ce que** la partie terminale de la première extrémité (51) des pattes de fixation (50) comprend en outre un talon (510) qui s'étend axialement dans une direction opposée à la pièce annulaire.

2. Ensemble selon la revendication 1, **caractérisé en ce que** les pattes de fixation élastiques (50) sont réalisées en un matériau métallique réfractaire choisi parmi au moins: l'Inconel®, l'Hastelloy® et le Waspalloy®.

3. Ensemble selon la revendication 1 ou 2, **caractérisé en ce que** la pièce d'arrière-corps (10) est une tuyère d'échappement.

4. Moteur aéronautique, **caractérisé en ce qu'**il comprend un ensemble d'arrière corps selon l'une quelconque des revendications 1 à 3.

## Patentansprüche

1. Heckteilanordnung für ein Luftfahrttriebwerk, umfassend, in einer axialen Richtung, ein ringförmiges Teil (40) aus metallischem Werkstoff, das mit dem Luftfahrttriebwerk fest verbunden ist, und ein Heckteilstück (10) aus Keramikmatrix-Verbundwerkstoff, das wenigstens in seinem stromaufwärtigen Teil eine Rotationsform aufweist, wobei das Heckteilstück (10) an dem ringförmigen Teil (40) durch elastisch flexible Befestigungslaschen (50) angebracht ist, wobei jede Befestigungslasche ein erstes Ende (51), das an dem ringförmigen Teil (40) befestigt ist, und ein zweites Ende (52), das an dem stromaufwärtigen Teil des Heckteilstücks (10) befestigt ist, aufweist, wobei das Heckteilstück (10) stromabwärts des ringförmigen Teils (40) angebracht ist, wobei der Rand (10a) des stromaufwärtigen Teils des Heckteilstücks (10) gegenüber der radialen Außenfläche des ringförmigen Teils (40) in axialer Richtung gehalten ist, wobei der Rand ferner in einer radialen Richtung oberhalb des Endteils des ersten Endes (51) der Befestigungslaschen (50) gehalten ist, **dadurch gekennzeichnet, dass** das Endteil des ersten Endes (51) der Befestigungslaschen (50) ferner einen Ansatz (510) umfasst, der sich axial in einer zu dem ringförmigen Teil entgegengesetzten Richtung erstreckt.

2. Anordnung nach Anspruch 1, **dadurch gekennzeichnet, dass** die elastischen Befestigungslaschen (50) aus einem feuerfesten metallischen Werkstoff, der aus wenigstens Inconel^{®}, Hastelloy^{®} und Waspalloy^{®} ausgewählt ist, gefertigt sind.

3. Anordnung nach Anspruch 1 oder 2, **dadurch gekennzeichnet, dass** das Heckteilstück (10) ein Strahlrohr ist.

4. Luftfahrttriebwerk, **dadurch gekennzeichnet, dass** es eine Heckteilanordnung nach einem der Ansprüche 1 bis 3 umfasst.

## Claims

1. An after-body assembly for an aeroengine, the assembly comprising, in an axial direction, an annular part (40) made of metallic material secured to the aeroengine and an after-body part (10) made of ceramic matrix composite material presenting the form of a body of revolution at least in its upstream portion, the after-body part (10) being mounted on the annular part (40) by resiliently flexible fastener tabs (50), each fastener tab having a first end (51) fastened to the annular part (40) and a second end (52) fastened to the upstream portion of the after-body part (10), the after-body part (10) being mounted downstream from the annular part (40), with the edge (10a) of the upstream portion of said after-body part (10) being held facing the outer radial surface of the annular part (40) in the axial direction, said edge being also held in a radial direction overlying the terminal part of the first ends (51) of the fastener tabs (50), the assembly being **characterized in that** the terminal part of the first end (51) of each fastener tab (50) further includes a stub (510) that extends axially in a direction away from the annular part.

2. An assembly according to claim 1, **characterized in that** the resilient fastener tabs (50) are made of a refractory metallic material selected from at least: Inconel®; Hastelloy ®; and Waspalloy®.

3. An assembly according to claim 1 or 2, **characterized in that** the after-body part (10) is an exhaust nozzle.

4. An aeroengine, **characterized in that** it includes an after-body assembly according to any one of claims 1 to 3.
